# EUROPÄISCHE PATENTSCHRIFT

(11) **EP 0 665 422 B1**
(45) Veröffentlichungstag und Bekanntmachung des Hinweises auf die Patenterteilung: **28.06.2000**
(21) Anmeldenummer: 95101232.7
(22) Anmeldetag: 30.01.1995
(51) Int. Cl.: G01L 1/00, G01L 1/26, G01G 21/23, G01G 23/00

(54) **Lastwägeeinrichtung mit seitlichem Anschlag und Wälzkörpern**
Load-weighing device with lateral stop and rolling elements
Dispositif pour peser une charge avec une butée latérale et des éléments roulants

(30) Priorität: 28.01.1994 DE 9401459 U
(43) Veröffentlichungstag der Anmeldung: 02.08.1995
(73) Patentinhaber: Pfister GmbH, 86165 Augsburg (DE)
(72) Erfinder: Häfner, Hans Wilhelm, D-86551 Aichach-Walchshofen (DE); Wölfl, Siegfried, D-86159 Augsburg (DE); Ripp, Peter, D-86163 Augsburg (DE); Pauer, Andreas, D-86179 Augsburg (DE)
(74) Vertreter: Fiener, Josef

(56) Entgegenhaltungen:
- EP-A- 0 430 680
- WO-A-88/09919
- DE-A- 4 102 931
- DE-U- 9 213 163
- DE-U- 9 304 804

## Beschreibung

Die Erfindung betrifft eine Lastwägeeinrichtung mit einer Wägezelle, die zwischen einem Lasteinleitungsteil und einem Abstützteil zur Gewichtsmessung angeordnet ist, gemäß dem Oberbegriff des Anspruches 1.

Derartige Lastwägeeinrichtungen, die häufig auch als Lastwägeeinheiten oder als Lastaufnahmemittel bezeichnet werden, werden im "Handbuch des Wägens" (M. Kochsiek, Braunschweig, 1988) S. 154 bis 160 in dem Kapitel "Bauelemente für Lastaufnahmemittel" beschrieben. Auf S. 157 wird hierbei eine übliche Anordnung mit einer oder mehreren Wägezellen beschrieben, wobei die Wägelast eines Behälters über den Lastträger oder über das Lastaufnahmemittel direkt auf die Wägezelle übertragen wird. Für die notwendige Schubentkopplung bei einer Behälteraufhängung mit drei Wägezellen wird hierbei eine Wägezelle mit Horizontalfesselung beschrieben. Auf S. 158 werden verschiedene Lagerungsmöglichkeiten für Wägezellen dargestellt, die eine horizontale Beweglichkeit zum Ausgleich von Temperatureinflüssen und dergleichen erlauben. Insbesondere werden unter der Bezeichnung "Elastomerlager" und "Pendellager" zwei Lastwägeeinrichtungen beschrieben, die mittels Gummischichten horizontale Auslenkungen und auch Schrägstellungen erlauben, sowie aufgrund der Gummischicht eine stabilisierende Rückstellkraft ausüben.

Aus der DE 41 02 931 ist eine gattungsgemäße Kraftmeßvorrichtung bekannt, die auch Einflüsse aufgrund von Wärmedehnungen, Belastungsdurchbiegungen und Seitenkräften, etwa durch Wind und/oder Verdrehbewegungen um eine vertikale Achse ausgleichen kann.

Hierbei ist jedoch nachteilig, daß die dort beschriebenen Elastomerlager bzw. Pendellager eine relativ große Bauhöhe aufweisen, da die Entkoppelungslager aus Elastomerschichten über der eigentlichen Wägezelle angeordnet sind. Zudem sind noch gesonderte Bauelemente als Anschläge zur Begrenzung der seitlichen Auslenkung erforderlich, so daß der Bauaufwand relativ groß ist.

Demzufolge liegt der Erfindung die Aufgabe zugrunde, eine Lastwägeeinrichtung zu schaffen, die eine geringe Bauhöhe und einen geringen Bauaufwand aufweist.

Diese Aufgabe wird gelöst durch eine Lastwägeeinrichtung gemäß den Merkmalen des Anspruches 1.

Durch die vorgeschlagene ineinandergesteckte Hülsen-Bolzen-Lagerung ergibt sich eine sehr flache Lastwägeeinrichtung mit integriertem Begrenzungsanschlag. Zudem läßt sich auf einfache Weise eine Abhebesicherung verwirklichen. Die eingesetzten Wälzkörper ergeben wahlweise ein Festlager, ein Längsführungslager oder ein Loslager. Hierdurch wird eine besonders große Variabilität in Anpassung an die jeweils gewünschte Lagerungsart erreicht. Zudem ergibt sich durch die bevorzugte Verwendung einer Wägezelle mit einem Block aus elastomerem Material eine automatische Rückstellung nach Belastung, sowohl in Horizontalrichtung als auch hinsichtlich einer Schrägstellung.

Bevorzugt wird hierbei eine Wägezelle gemäß der DE 41 02 931 verwendet, die ähnlich wie die ineinandergesteckte Hülsen-Bolzen-Lagerung mehrere Freiheitsgrade aufweist. Hierdurch eignet sich die vorgeschlagene Lastwägeeinrichtung insbesondere als Bunkerwägezelle.

Durch die nunmehr vorgeschlagene ineinandergesteckte Hülsen-Bolzen-Lagerung als Begrenzungsanschlag direkt neben der Wägezelle kann auf einfache Weise eine flachbauende, stabile Lastwägeeinrichtung erreicht werden, die je nach Anwendungsfall die erforderliche Abhebesicherung sowie durch die eingesetzten Wälzkörper die Festlegung, d.h. Begrenzung des Freiheitsgrades, in einem Freiheitsgrad, z. B. als Längsführungslager oder als Festlager erlaubt.

Weitere vorteilhafte Ausgestaltungen sind Gegenstand der Unteransprüche.

Nachfolgend wird ein Ausführungsbeispiel anhand der Zeichnung näher erläutert und beschrieben. Hierbei zeigen:
- Fig. 1: eine Lastwägeeinrichtung in Perspektivdarstellung mit Teilschnitt des Begrenzungsanschlages;
- Fig. 2: einen Längsschnitt durch die Lastwägeeinrichtung gemäß Fig. 1;
- Fig. 3: eine Ausbildung des Begrenzungsanschlages als Loslager;
- Fig. 4: die Ausführung des Begrenzungsanschlages als Längsführungslager; und
- Fig. 5: die Ausführung des Begrenzungsanschlages als Festlager.

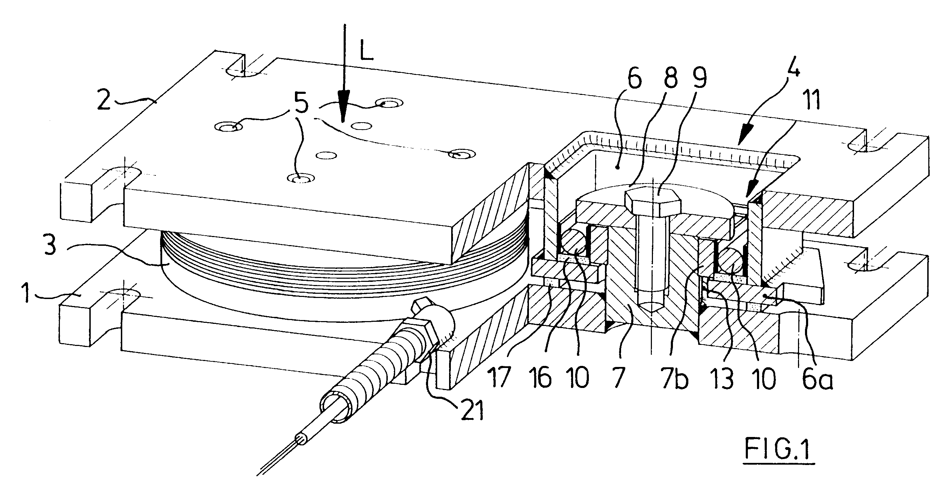

In Fig. 1 ist in perspektivischer Darstellung eine Lastwägeeinrichtung dargestellt, die im wesentlichen aus einem plattenförmigen Abstützteil 1, einem ebenfalls plattenförmigen Lasteinleitungsteil 2, einer dazwischen angeordneten flachen, scheibenförmigen Wägezelle 3 und einem neben der Wägezelle 3 angeordneten Begrenzungsanschlag 4 besteht. Das untere Abstützteil 1 wird mit einem Gerüst verschraubt, während das Lasteinleitungsteil 2 mit einem zu wiegenden Behälter, Silo oder Bunker über nicht näher dargestellte Konsolen verschraubt wird. Die Wägezelle 3 ist, wie oben ausgeführt, bevorzugt als Kraftmeßvorrichtung gemäß der DE 41 02 931 ausgebildet und besteht im wesentlichen aus einem elastomeren Block, der sowohl die Bewegungsmöglichkeiten in Querrichtung, Pendelrichtung und geringfügig auch in Drehrichtung, als auch die automatische Rückstellung ermöglicht. Neben der Wägezelle 3 ist nunmehr unmittelbar der Begrenzungsanschlag 4 zur wahlweisen Begrenzung der Bewegungen in den vorstehend genannten Freiheitsgraden vorgesehen. Der Begrenzungsanschlag 4 ist hierbei unmittelbar an den plattenförmigen Teilen 1 und 2 vorgesehen, die durch Schrauben 5 mit der Wägezelle 3 verbunden sind.

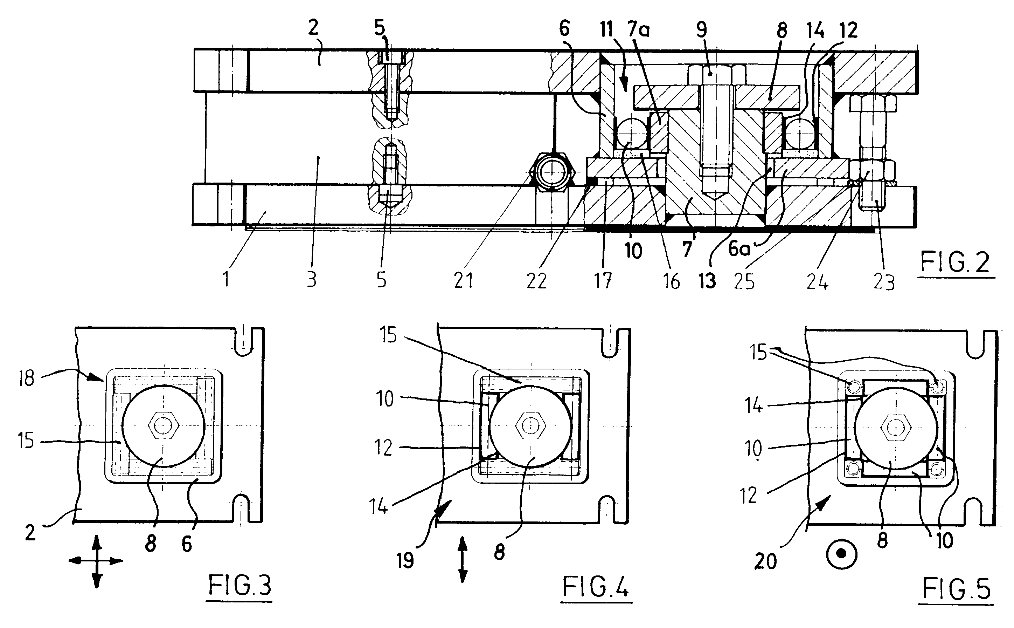

Der Begrenzungsanschlag 4 besteht im wesentlichen aus einer mit erheblichem Spiel ineinandergesteckten Hülse 6 und Bolzen 7. Hierbei ist die Hülse 6 mit dem oberen Krafteinleitungsteil 2 verbunden, insbesondere verschweißt, während der Bolzen 7 mit dem unteren Abstützteil 1 verschweißt ist (vgl. auch Fig. 2).

Die Hülse 6 ist hierbei in bevorzugter Ausführung als Vierkantrohr ausgebildet, in das der Bolzen 7 von unten her hineinragt. Dieser Bolzen 7 ist bevorzugt mit einer zur Innenform der Hülse 6 komplementär ausgebildeten Außenform versehen, indem beispielsweise eine Scheibe 7a mit einer äußeren Viereckform auf den Bolzen 7 aufgesteckt ist. Diese zweiteilige Ausbildung des Bolzens 7 mit der darübergesteckten Vierkantscheibe 7a erfolgt vorwiegend aus Fertigungsgründen. Jedoch kann der Bolzen 7 mit der Scheibe 7a auch einstückig ausgebildet sein. Durch das Ineinanderstecken des Bolzens 7 (ggfs. mit der Scheibe 7a) in die Hülse 6 entsteht somit ein umlaufender, relativ breiter Spalt 11, wie dies insbesondere in den Fig. 3 bis 5 dargestellt und näher erläutert wird.

An der Hülse 6 ist an dem freien, stirnseitigen Ende eine Umgriffscheibe 6a vorgesehen, die unter Bildung eines relativ geringen Ringspaltes 13 den Bolzen 7 umgreift. Auf dem freien Ende des Bolzens 7 ist mittels einer Schraube 9 eine Abdeckscheibe 8 befestigt, deren Außendurchmesser größer als der Innendurchmesser der Umgriffscheibe 6a ist. Hierdurch wird erreicht, daß sich bei sehr großen Windlasten und damit Schrägstellung des Bunkers das obere Lasteinleitungsteil 2 nicht von dem Abstützteil 1 abheben kann und somit durch diesen Umgriff der Umgriffscheibe 6a eine Abhebesicherung gebildet wird.

In den ringsumlaufenden Spalt 11 zwischen der Hülse 6 und dem Bolzen 7 bzw. dessen zugeordneter Scheibe 7a können nun Wälzkörper 10, bevorzugt in Form von Rollen, eingesetzt werden. Diese Wälzkörper 10 sind dabei etwas kürzer gewählt als die Seitenlänge der als Vierkantrohr ausgebildeten Hülse 6. Zur weiteren Verringerung der Reibung zwischen Hülse 6 und Bolzen 7 bzw. der Scheibe 7a sind auf diesen äußere und innere Stahlbänder 12 und 14 aufgebracht, beispielsweise aufgeklebt. Es sei jedoch darauf hingewiesen, daß die mit den Wälzkörpern 10 in Berührung stehenden Flächen gehärtet werden können, um dadurch die Abwälzbewegung der Wälzkörper 10 bei einer Schrägstellung oder Relativbewegung des Lasteinleitungsteils 2 bezüglich des Abstützteils 1 möglichst gering zu halten. Weiterhin sei darauf hingewiesen, daß die hier gewählte Zuordnung der Hülse 6 zu der oberen Lasteinleitungsplatte 2 einerseits und des Bolzens 7 zu der unteren Abstützplatte 1 andererseits auch umgekehrt werden kann, also die äußere Hülse 6 in spiegelbildlicher Weise an dem unteren Abstützteil 1 angeordnet sein kann, während dann der Bolzen 7 von oben her in die Hülse 6 hineinragen würde.

Zur Abstützung und Festlegung der Wälzkörper 10 in dem umlaufenden Spalt 11 sind in diesen elastische Distanzstücke 15, insbesondere in Schlauchform eingelegt (vgl. Fig. 4 und 5). Unterhalb der Wälzkörper 10 ist zudem ein Schaumstoffband 16 vorgesehen und unterhalb der Umgriffscheibe 6a ein Moosgummiband 17, um die gegeneinander beweglichen Teile, nämlich die Hülse 6 und den Bolzen 7, weitgehend gegeneinander abzudichten, so daß das Eindringen von Staub in den relativ engen Ringspalt 13, der die maximale Querbeweglichkeit festlegt, zu vermeiden.

In Fig. 2 ist ein Längsschnitt der Lastwägeeinrichtung dargestellt, wobei die vorstehend beschriebenen Bauteile identisch sind, so daß auf deren Beschreibung verzichtet wird. Weiterhin ist noch der Anschluß 21 für das Auswertekabel an die Wägezelle 3 dargestellt, sowie eine Leiste 22, die unter die Umgriffscheibe 6a geschoben werden kann, um somit zusammen mit der hier rechts dargestellten Schraube 23, der Mutter 24 und der Unterlegscheibe 25 eine Transportsicherung zu bilden, die die Freiheitsgrade der Lastwägeeinrichtung soweit einschränkt, daß bei einem Transport eines Bunkers oder einer Behältermischwaage keine Beschädigungen an der Wägezelle 3 auftreten können.

In den Fig. 3 bis 5 werden nunmehr die wahlweise Festlegung der Lagerungsart der den Begrenzungsanschlag 4 bildenden Hülsen-Bolzen-Lagerung 6, 7 beschrieben. Wie durch die entsprechenden Symbole angedeutet, kann durch entsprechendes Einlegen der Wälzkörper 10 ein Loslager 18 (Fig. 3), ein Längsführungslager 19 (Fig. 4) und ein Festlager 20 (Fig. 5) gebildet werden. Bei dem Loslager 18 gemäß Fig. 3 werden in den ringsumlaufenden Spalt 11 nur vier gleich lange elastische Distanzstücke 15 in Form von Schlauchabschnitten eingelegt. Hierdurch kann sich die Hülse 6 und damit das Krafteinleitungsteil 2 bezüglich des Bolzens 7 und des Abstützteils 1 beispielsweise in Längs- und Querrichtung bewegen. In dem Längsführungslager 19 gemäß Fig. 4 sind dagegen an gegenüberliegenden Seiten der Vierkantrohr-Hülse 6 zwei rollenförmige Wälzkörper 10 eingelegt, so daß eine Relativbeweglichkeit nur noch in der mit dem Pfeilsymbol angedeuteten Richtung möglich ist, da dort die elastischen Distanzstücke 15 ein Nachgeben in dieser Richtung und damit eine Relativbewegung der Hülse 6 bezüglich des Bolzens 7 ermöglichen.

In Fig. 5 ist schließlich als dritte Variante die Ausführung als Festlager 20 dargestellt, wobei an allen vier Seiten des Spaltes 11 ein Wälzkörper 10 eingepaßt ist, so daß eine Relativbewegung in Längs- und Querrichtung nicht mehr möglich ist, sondern nur noch eine Verdrehbewegung der Hülse 6 um die Achse des Bolzens 7. In den Eckbereichen, jeweils zwischen den Wälzkörpern 10, ist hierbei das elastische Distanzstück 15 in aufgestellter Position dargestellt, um ein Verschieben der Wälzkörper 10 und damit eine eventuelle gegenseitige Behinderung zu vermeiden.

Wie ersichtlich, kann somit durch einfaches, wahlweises Einlegen der Wälzkörper 10 die gewünschte Lagerungsart als Loslager 18, Längsführungslager 19 oder als Festlager 20 in einfacher Weise erreicht werden. Somit ist beispielsweise mit dem Festlager 20 eine Horizontalfesselung des auf dem Lasteinleitungsteil 2 befindlichen Behälters, Silos oder Bunkers möglich, während die anderen Lager einer Dreipunktabstützung als Loslager 18 gemäß Fig. 3 ausgeführt werden, um bei diesem Anwendungsfall eine statische Überbestimmung zu vermeiden.

## Patentansprüche

1. Lastwägeeinrichtung mit einer Wägezelle (3), die zwischen einem Lasteinleitungsteil (2) und einem Abstützteil (1) zur Gewichtsmessung angeordnet ist, wobei neben der Wägezelle (3) ein Begrenzungsanschlag (4) vorgesehen ist, der aus einer in Lastrichtung (L) mit Horizontalspiel ineinandergesteckten Hülsen-Bolzen-Lagerung (6, 7) gebildet ist, sowie eines der Hülsen-Bolzen-Lagerungselemente (6 oder 7) mit dem Lasteinleitungsteil (2) und das andere Hülsen-Bolzen-Lagerungselement (7 oder 6) mit dem Abstützteil (1) verbunden ist,
dadurch gekennzeichnet, daß zwischen Hülse (6) und Bolzen (7) Wälzkörper (10) eingesetzt sind.

2. Lastwägeeinrichtung nach Anspruch 1, dadurch gekennzeichnet, daß die Hülse (6) als Vierkantrohr ausgebildet ist und der darin mit Horizontalspiel eingesteckte Bolzen (7) eine korrespondierende Außenform aufweist.

3. Lastwägeeinrichtung nach Anspruch 1 oder 2, dadurch gekennzeichnet, daß die Hülse (6) an ihrem freien, stirnseitigen Ende eine Umgriffscheibe (6a) aufweist.

4. Lastwägeeinrichtung nach Anspruch 3, dadurch gekennzeichnet, daß am Bolzen (7) eine Scheibe (8) befestigt ist, deren Außendurchmesser zur Bildung einer Abhebesicherung größer als der Innendurchmesser der Umgriffscheibe (6a) ist.

5. Lastwägeeinrichtung nach einem der Ansprüche 1 bis 4, dadurch gekennzeichnet, daß die Lastwägeeinrichtung als Bunkermeßzelle zur gravimetrischen Bunkerinhaltsmessung ausgebildet ist.

6. Lastwägeeinrichtung nach einem der Ansprüche 1 bis 5, dadurch gekennzeichnet, daß am Bolzen (7) eine der Form der Hülse (6) angepaßte Scheibe (7a) vorgesehen ist und in dem dazwischen gebildeten Spalt (11) zur Festlegung der Lagerungsart die Wälzkörper (10) eingesetzt sind.

7. Lastwägeeinrichtung nach einem der Ansprüche 1 bis 6, dadurch gekennzeichnet, daß die Wälzkörper (10) als Rollen ausgebildet sind.

8. Lastwägeeinrichtung nach Anspruch 6 oder 7, dadurch gekennzeichnet, daß zur Ausbildung eines Festlagers (20) vier Wälzkörper (10) eingesetzt sind.

9. Lastwägeeinrichtung nach Anspruch 6 oder 7, dadurch gekennzeichnet, daß zur Bildung eines Längsführungslagers (19) zwei Wälzkörper (10) eingesetzt sind.

10. Lastwägeeinrichtung nach einem der Ansprüche 6 bis 9, dadurch gekennzeichnet, daß in dem Spalt (11) wenigstens ein elastisches Distanzstück (15) eingesetzt ist.

11. Lastwägeeinrichtung nach Anspruch 10, dadurch gekennzeichnet, daß das Distanzstück (15) als Gummischlauch ausgebildet ist.

12. Lastwägeeinrichtung nach einem der Ansprüche 1 bis 11, dadurch gekennzeichnet, daß die Wägezelle (3) aus einem elastomeren, rückstellenden Material besteht.

## Claims

1. A load-weighing device comprising a load cell (3) which is interposed for weight measurement between a load introduction portion (2) and a support portion (1), wherein besides the load cell (3) there is provided a backstop (4) which is formed by a bearing (6, 7) of a sleeve and bolt fit into one another with a horizontal play from load direction (L), and further one of said sleeve/bolt bearing elements (6 or 7) is connected with said load introduction portion (2) and the other sleeve/bolt support element (7 or 6) is connected with said support portion (1),
characterized in that
rolling elements (10) are inserted between said sleeve (6) and said bolt (7).

2. The load-weighing device according to claim 1, characterized in that the sleeve (6) is formed in the shape of a square pipe and the bolt (7) inserted therein with a horizontal play has a corresponding outer shape.

3. The load-weighing device according to claim 1 or 2, characterized in that the free front end of the sleeve (6) is provided with an embracing disk plate (6a).

4. The load-weighing device according to claim 3, characterized in that to the bolt (7) there is attached a plate (8), the external diameter of which is larger than the internal diameter of the embracing disk plate (6a) so as to form a removal protection.

5. The load-weighing device according to any of claims 1 to 4, characterized in that the load-weighing device is in the form of a bin analyzer for gravimetrically measuring the contents of the container.

6. The load-weighing device according to any of claims 1 to 5, characterized in that the bolt (7) is provided with a plate (7a) matching the form of the sleeve (6) and that the rolling elements (10) are inserted in the gap (11) formed therebetween in order to determine the type of bearing.

7. The load-weighing device according to any of claims 1 to 6, characterized in that the rolling elements (10) are designed as rolls.

8. The load-weighing device according to claim 6 or 7, characterized in that four rolling elements (10) are inserted so as to form a fixed bearing (20).

9. The load-weighing device according to claim 6 or 7, characterized in that two rolling elements (10) are inserted so as to form a longitudinal guide bearing (19).

10. The load-weighing device according to any of claims 6 to 9, characterized in that at least one flexible spacer (15) is inserted in the gap (11).

11. The load-weighing device according to claim 10, characterized in that the spacer (15) is formed in the shape of a rubber tube.

12. The load-weighing device according to any of claims 1 to 11, characterized in that the load cell (3) is made of an elastomeric, resetting material.

## Revendications

1. Dispositif pour peser une charge, avec une cellule de pesage (3) placée entre une pièce d'introduction de charge (2) et une pièce de support (1) pour la mesure pondérale, une butée de limitation (4), formée par un palier composé d'une douille et d'un boulon (6, 7) emboîtés l'un dans l'autre dans le sens de charge (L) avec un jeu horizontal, étant prévue à côté de la cellule de pesage (3), et l'un des éléments du palier douille-boulon (6 ou 7) étant raccordé à la pièce d'introduction de charge (2) et l'autre élément du palier douille-boulon (7 ou 6) étant raccordé à la pièce de support (1), **caractérisé en ce que** des éléments roulants (10) sont insérés entre la douille (6) et le boulon (7).

2. Dispositif pour peser une charge selon la revendication 1, **caractérisé en ce que** la douille (6) est formée comme tube carré et que le boulon (7) qui y est inséré avec un jeu horizontal présente une forme extérieure correspondante.

3. Dispositif pour peser une charge selon la revendication 1 ou 2, **caractérisé en ce que** la douille (6) présente un disque d'enveloppement (6a) sur son extrémité libre frontale.

4. Dispositif pour peser une charge selon la revendication 3, **caractérisé en ce qu'**un disque (8) est fixé sur le boulon (7), le diamètre extérieur de ce disque étant supérieur au diamètre intérieur du disque d'enveloppement (6a) pour la formation d'une sécurité de levage.

5. Dispositif pour peser une charge selon l'une des revendications 1 à 4, **caractérisé en ce que** le dispositif pour peser une charge est formé comme une cellule de mesure de silo pour la mesure gravimétrique du contenu du silo.

6. Dispositif pour peser une charge selon l'une des revendications 1 à 5, **caractérisé en ce qu'**un disque (7a) adapté à la forme de la douille (6) est prévu sur le boulon (7) et que les éléments roulants (10) sont insérés dans la fente (11) intermédiaire formée entre le disque et la douille pour déterminer le type de palier.

7. Dispositif pour peser une charge selon l'une des revendications 1 à 6, **caractérisé en ce que** les éléments roulants (10) sont formés comme des rouleaux.

8. Dispositif pour peser une charge selon la revendication 6 ou 7, caractérisé en ce que quatre éléments roulants (10) sont utilisés pour former une butée fixe (20).

9. Dispositif pour peser une charge selon la revendication 6 ou 7, **caractérisé en ce que** deux éléments roulants (10) sont utilisés pour former un palier de guidage longitudinal (19).

10. Dispositif pour peser une charge selon l'une des revendications 6 à 9, **caractérisé en ce qu'**au moins une pièce d'écartement (15) élastique est insérée dans la fente (11).

11. Dispositif pour peser une charge selon la revendication 10, **caractérisé en ce que** la pièce d'écartement (15) est formée comme un tuyau en caoutchouc.

12. Dispositif pour peser une charge selon l'une des revendications 1 à 11, **caractérisé en ce que** la cellule de pesage (3) est composée d'un matériau élastomère et élastique.
